# EUROPÄISCHE PATENTANMELDUNG

(11) **EP 1 843 637 A2**
(43) Veröffentlichungstag der Anmeldung: **10.10.2007**
(21) Anmeldenummer: 07006803.6
(22) Anmeldetag: 31.03.2007
(51) Int. Cl.: H05B 6/02

(54) **Vorrichtung zum induktiven Erwärmen**

(30) Priorität: 04.04.2006 DE 202006005576 U
(71) Anmelder: Lupotron GmbH, 86153 Augsburg (DE)
(72) Erfinder: Feller, Bernhard, 86316 Friedberg (DE); Wolf, Arne, 86438 Kissing (DE)
(74) Vertreter: Ernicke, Klaus Stefan

(57) **Zusammenfassung**

Die Erfindung betrifft eine Vorrichtung (1) zum induktiven Erwärmen von Werkzeugaufnahmen (2) und anderen Gegenständen und beinhaltet eine Spulenanordnung (6) mit einem Polschuh (9), der aus mehreren geschichteten Lamellen (10) aus einem magnetisch und elektrisch leitenden Material besteht. Die metallischen Lamellen (10) sind stehend angeordnet und gegenseitig elektrisch isoliert.

## Beschreibung

Die Erfindung betrifft eine Vorrichtung zum induktiven Erwärmen von Gegenständen, insbesondere von Werkzeugaufnahmen, mit den Merkmalen im Oberbegriff des Hauptanspruchs.

Eine solche Vorrichtung ist in Gestalt eines Schrumpfgerätes aus der EP 1 165 284 B1 bekannt. Das Schrumpfgerät weist eine Werkzeugaufnahme mit einem Hülsenteil auf, in welches der Schaft eines Werkzeugs mit Schrumpfsitz eingesetzt und gehalten werden kann. Zum Einsetzen und Lösen des Werkzeugs wird die Werkzeugaufnahme mittels einer Spulenanordnung beheizt, wobei der Schrumpfsitz durch die unterschiedlichen Dehnungen von Werkzeugschaft und Werkzeugaufnahme gelöst werden kann. Auf der Spulenanordnung ist ein Polschuh angeordnet, der die magnetischen Feldlinien an der betreffenden Stirnseite der Induktionsspule konzentrieren soll, um eine übermäßige induktive Erwärmung des Werkzeugs zu vermeiden. Der vorbekannte Polschuh besteht aus einem magnetisch leitenden und elektrisch nicht leitenden Werkstoff, insbesondere Ferrit. Ferrit ist jedoch ein empfindliches Material, welches spröde und bruchanfällig ist. Es lässt sich nur schwer mechanisch bearbeiten und ist außerdem kostenintensiv.

Es ist Aufgabe der vorliegenden Erfindung, eine bessere Vorrichtung zum induktiven Erwärmen aufzuzeigen.

Die Erfindung löst diese Aufgabe mit den Merkmalen im Hauptanspruch.
Der aus magnetisch und elektrisch leitenden Lamellen aufgebaute Polschuh hat den Vorteil, dass er ebenfalls eine übermäßige Erwärmung des Werkzeugs in einem Schrumpfgerät vermeidet, wobei der Polschuh wesentlich kostengünstiger und leichter zu bearbeiten ist als Ferrit. Mit dem Lamellenmaterial sind auch andere Formgebungen des Polschuhs und andere Handhabungseigenschaften, insbesondere Verstellmöglichkeiten, gegeben. Die Lamellen haben zudem den Vorteil, dass sie eine noch höhere Permeabilität bzw. magnetische Leitfähigkeit als Ferrit aufweisen.

Bei der beanspruchten Polschuhausbildung wird das Entstehen von Wirbelströmen in den Lamellen in Kauf genommen, wobei ein quer gerichteter Stromfluss durch die Lamellenpakete über eine gegenseitige Isolierung der Lamellen verhindert werden kann. Diese gezielte Wirbelstrombeeinflussung verhindert eine übermäßige Erwärmung der Lamellen und des Werkzeugs.

Der Polschuh kann in unterschiedlicher Weise ausgebildet sein. In den Unteransprüchen sind hierfür verschiedene vorteilhafte Ausführungsbeispiele angegeben. Durch entsprechende Gestaltung kann der Polschuh als Ganzes bedarfsgerecht ausgewechselt werden. Alternativ kann der Polschuh mehrteilig ausgebildet sein und Verstellmöglichkeiten aufweisen. Hierüber lassen sich Anpassungen an unterschiedliche Geometrien, insbesondere differierende Werkzeugdurchmesser erreichen.

Für den Polschuh ist es ferner in verschiedenen Konfigurationen von Vorteil, wenn mehrere Lamellenpakete übereinander angeordnet sind, wobei die Lamellenausrichtungen differieren und insbesondere kreuzweise angeordnet sind.

Besonders günstig ist die Ausbildung eines Polschuhs aus mehreren Blöcken, die bevorzugt aus den genannten Lamellenpaketen, alternativ aber auch aus anderen Materialien bestehen können. Dies ermöglicht eine besonders bedienungsgünstige Ausbildung des Polschuhs und auch die Verwendung eines Polschuhhalters. Hierbei ist insbesondere die lösbare Anordnung eines Polschuhs oder eines Polschuhhalters günstig, weil dies den Austausch von Polschuhen zu Wartungs- und Reinigungszwecken, aber auch einen Polschuhwechsel zur Anpassung an unterschiedliche Abmessungen der Werkzeugaufnahme, insbesondere der Spannhülse und des Werkzeugs ermöglicht. Für die sichere und unfallfreie Bedienung ist es günstig, bei einer lösbaren Polschuhanordnung eine Verschlusseinrichtung vorzusehen, welche den Polschuh oder dessen Polschuhhalter im Betrieb sicher und lagegenau fixiert. Die Ausbildung des Verschlusses als Bajonettverschluss ist besonders günstig, leicht zu handhaben und betriebssicher.

Ein Polschuhhalter mit einem ringförmigen Gehäuse, in dem mehrere blockförmige Polschuhteile angeordnet sind, stellt eine besonders vorteilhafte Ausführungsform dar. Dabei brauchen nur die unmittelbar zum Leiten des magnetischen Flusses erforderlichen Polschuhteile aus einem hierfür geeigneten Material bestehen und können eine relativ kleine Abmessung haben. Dies spart teures Polschuhmaterial und verringert die Baugröße. Der Polschuhhalter kann aus einem kostengünstigeren Material, z.B. Kunstoff, bestehen.

Für die sichere magnetisch leitende Verbindung zwischen den blockartigen Polschuhteilen und der Spulenanordnung ist es günstig, eine entsprechend angepasste Polschuhaufnahme vorzusehen, die vorteilhafterweise als Blockaufnahme ausgebildet ist. Hierdurch können die Blöcke in angepassten Ausnehmungen formschlüssig und sicher aufgenommen werden. Trotz der Lösbarkeit des Polschuhs wird hierdurch eine sichere und reproduzierbare magnetisch leitende Verbindung geschaffen. Die drehbare Anordnung der bevorzugt als Aufnahmering ausgebildeten Blockaufnahme ist hierbei in Verbindung mit einem Bajonettverschluss und dessen Kinematik von Vorteil. Alternativ kann ein stationärer Ring mit durchgehenden Ausnehmungen Bestandteil eines Bajonettverschlusses sein.

In den Unteransprüchen sind weitere vorteilhafte Ausgestaltungen der Erfindung angegeben.

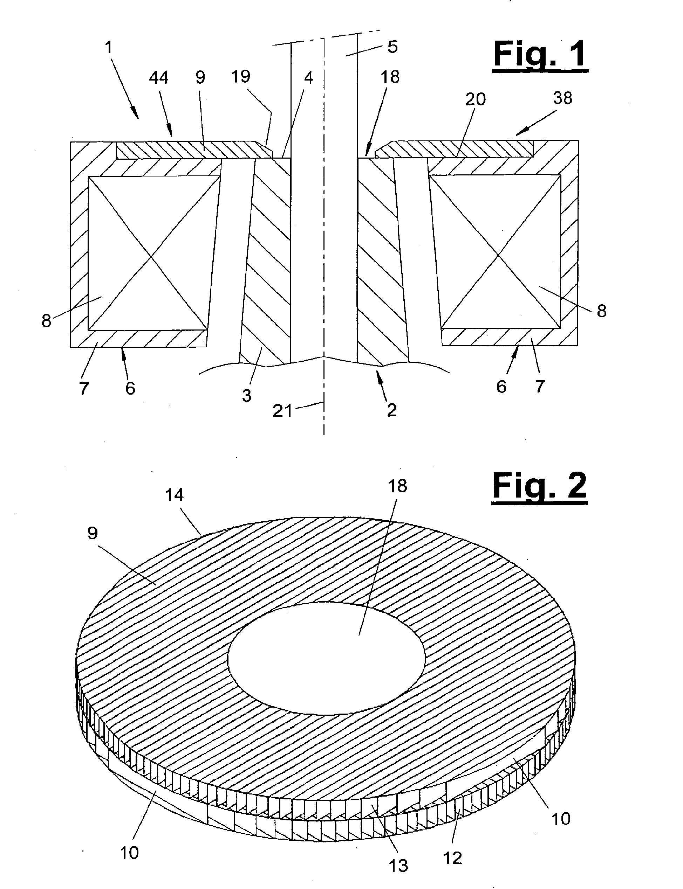

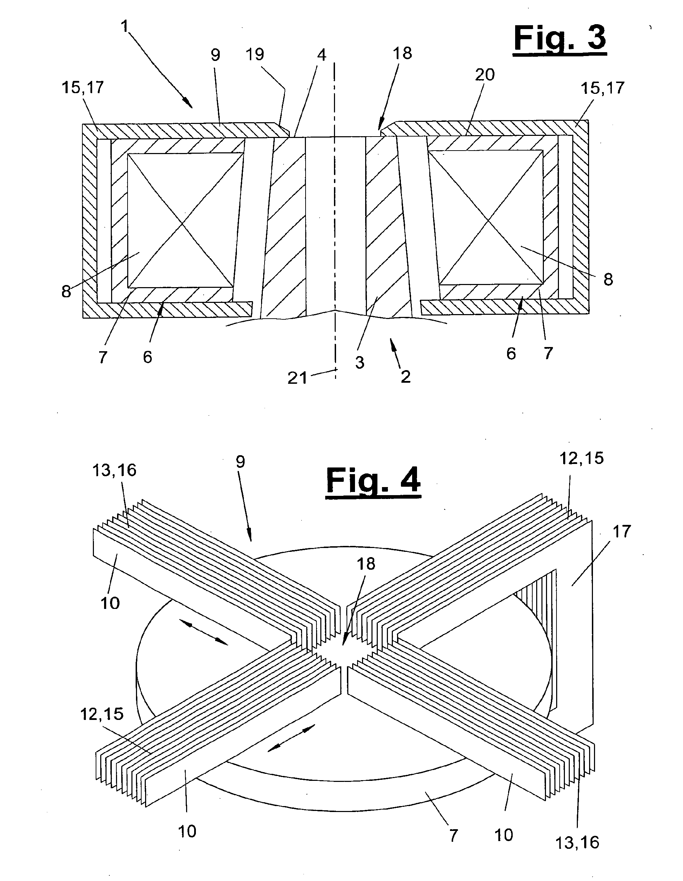

Die Erfindung ist in den Zeichnungen beispielsweise und schematisch dargestellt. Im Einzelnen zeigen:
- Figur 1:: einen Querschnitt durch eine erste Variante eines Schrumpfgerätes mit einem scheibenförmigen Polschuh,
- Figur 2:: eine perspektivische Ansicht eines solchen aus zwei Lamellenpaketen bestehenden Polschuhs,
- Figur 3:: eine zweite Variante des Schrumpfgeräts im Querschnitt mit einem aus verstellbaren bügelförmigen Einzelblöcken bestehenden Polschuhs,
- Figur 4:: eine perspektivische Ansicht eines aus Blöcken bestehenden Polschuhs mit der Darstellung von zwei Varianten,
- Figur 5:: eine Draufsicht auf ein Lamellenpaket,
- Figur 6:: ein Schrumpfgerät in Seitenansicht,
- Figur 7 und 8:: eine Spulenanordnung mit einem Polschuhhalter in perspektivischer Ansicht und in Draufsicht,
- Figur 9 bis 12:: einen Polschuhhalter in verschiedenen Ansichten und
- Figur 13:: einen schematisierten Schnitt durch die Spulenanordnung mit dem Polschuhhalter und einer Blockaufnahme und
- Figur 14:: eine Variante der Blockaufnahme.
Die Erfindung betrifft eine Vorrichtung (1) zum induktiven Erwärmen von Gegenständen, bei denen es sich zum Beispiel um die in Figur 1 und 3 gezeigten Werkzeugaufnahmen (2) handelt. Die Vorrichtung (1) kann ein induktives Schrumpfgerät darstellen und im wesentlichen entsprechend der EP 1 165 284 B1 aufgebaut sein.

In der Ausbildung als Schrumpfgerät weist die Vorrichtung (1) eine Spulenanordnung (6) auf, welche z.B. ringförmig eine Werkzeugaufnahme (2) umgibt. Die Spulenanordnung (6) ist mit einer steuerbaren Stromquelle (29) verbunden und kann ein oder mehrere Spulengehäuse (7) aufweisen, in dem oder denen mindestens eine Spulenwicklung (8) angeordnet ist. Das Spulengehäuse (7) dient zur Magnetfeldabschirmung und kann z.B. aus einem Pulververbundwerkstoff, aus Kunststoff oder dgl. bestehen. Es umschließt z.B. ringförmig die Spulenwicklung (8). Die Werkzeugaufnahme (2) weist eine Hülse (3) zur Aufnahme des Schaftes eines Werkzeugs (5) auf. Die Anordnung kann die gleiche wie in der EP 1 165 284 B1 sein.

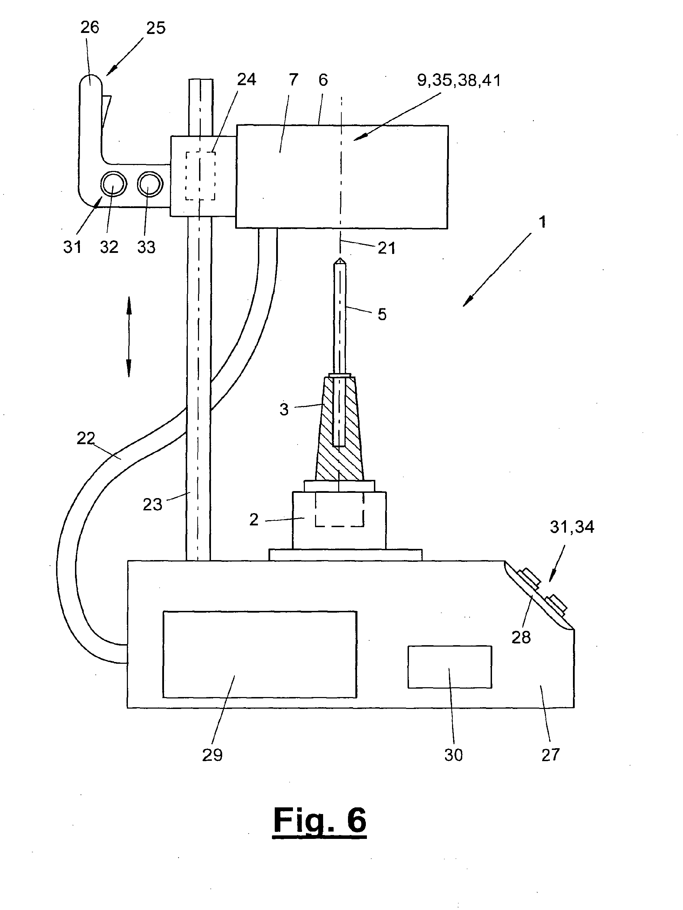

Figur 6 zeigt ein solches induktives Schrumpfgerät (1) in einer beispielhaften Ausführung. Es besteht aus einem Gehäuse (27), an dem ein oder mehrere stationäre oder bewegliche Halter für ein oder mehrere Werkzeugaufnahmen (2) angeordnet sind. Zum induktiven Aufheizen der Spannhülse (3) oder des sogenannten Futters der Werkzeugaufnahme (2) kann die Spulenanordnung (6) über dem Futter (3) für dessen induktive Beheizung positioniert werden. Für die Spulenanordnung (6) kann eine Führung (23), z.B. ein auf dem Gehäuse (27) angeordneter Ständer, vorhanden sein, an dem die Spulenanordnung (6) mit einer Bremseinrichtung und einer Verstelleinrichtung (25) höhenverstellbar und ggf. drehbar gelagert (24) ist/sind. Die Verstelleinrichtung (25) kann einen für die Handbedienung vorgesehenen Griff (26) mit einem Bremsschalter aufweisen, mit welchem die an der Lagerung (24) befindliche Bremseinrichtung zur Spulenverstellung betätigt wird. Die Bremseinrichtung besteht z.B. aus federbelasteten Bremsbacken, die sich an die Führung (23) anlegen und die Spulenanordnung (6) festhalten.

Das induktive Heizgerät (1) weist die besagte Stromquelle (29) auf, welche an beliebiger Stelle, z.B. extern oder wie in Figur 6 innerhalb des Gehäuses (27), angeordnet und mit dem Stromnetz verbunden sein kann. Die Stromquelle (29) erzeugt einen hochfrequenten Wechselstrom zum Speisen der Induktionsspule(n) bzw. der Spulenwicklung(en) (8) und ist mit dieser über ein flexibles Stromkabel (22) verbunden. Die Stromquelle (29) ist z.B. als Induktionsstromgenerator ausgebildet, der über eine Steuerung (30) steuerbar ist und ggf. mit unterschiedlichen Betriebs- oder Prozessparametern betrieben und angesteuert werden kann. Ein Unterschied kann in einem oder in mehreren Prozessparametern bestehen.

Die Prozessparameter können unterschiedlicher Art sein. Beispielsweise kann die Stromquelle (29) einen Induktionsstrom mit unterschiedlichen elektrischen Leistungen abgeben. Die Leistungen können beim Einschrumpfen kleiner als beim Ausschrumpfen sein. Das induktive Heizgerät (1) bietet eine Leistungsanpassung zumindest zum Ein- und Ausschrumpfen. Eine Leistungsanpassung für unterschiedliche Prozessteilnehmer, insbesondere unterschiedliche Futter (3) und/oder unterschiedliche Werkzeuge (5) ist optional. Hierauf kann alternativ verzichtet werden. Wenn eine solche Leistungsanpassung an Prozessteilnehmer möglich ist, kann für die verschiedenen Auswahlmöglichkeiten jeweils wiederum eine eigene Leistungsanpassung an der zugehörige Ein- und Ausschrumpfen durchgeführt werden.

Am Heizgerät (1) kann die jeweils gewünschte Leistung über eine mindestens Schalteinrichtung (31) eingestellt und über eine Steuerung der Prozessparameter, z.B. über Spannung und Stromstärke beeinflusst werden. Die Einschaltdauer ist ebenfalls ein steuerbarer Prozessparameter. Beim Induktionsspeisestrom kann ggf. auch die Frequenz als Prozessparameter geändert werden. Der Induktionsstrom kann ferner Rampen beim Ein- und Ausschalten aufweisen. Außerdem können Stromprogramme gefahren werden, in denen der Induktionsstrom während der Einspeisung in beliebig geeigneter Weise verändert wird. Diese Strombeeinflussungen können je nach Art und Einsatzzweck des induktiven Heizgeräts (1) unterschiedlich ausgebildet sein. Ein oder mehrere Prozessparameter können alternativ oder zusätzlich auch zu anderen Zwecken als zur Leistungssteuerung eingestellt werden.

Das induktive Heizgerät (1) weist eine Schalteinrichtung (31) mit mindestens einem Schalter, vorzugsweise mit zwei oder mehr Schaltern (32,33) auf, welche zum Auswählen unterschiedlicher Prozessparameter oder Parametersätze der Induktionsstromeinspeisung zum Ein- und Ausschrumpfen dienen. Beispielsweise wird der Schalter (32) zum Einschrumpfen und der Schalter (33) zum Ausschrumpfen vom Bediener betätigt. Die Schalter (32,33) können in enger Nachbarschaft angeordnet sein und eine Schaltergruppe bilden. Die Schalter (32,33) sind z.B. an der Spulenanordnung (6) oder der Verstelleinrichtung (25) angeordnet. Alternativ oder zusätzlich kann am Gehäuse (27) ein Bedienfeld (34) mit ein oder mehreren weiteren Schaltern angeordnet sein. Am Gehäuse (27) kann ferner mindestens eine Anzeige (28) vorhanden sein, mit der verschiedene Betriebszustände des Heizgeräts (1) und für weitere Informationen, z.B. eine Auswahl der verfügbaren Betriebs- und Prozessparameter oder dergleichen, angezeigt werden können.

An der Stirnseite (4) der Werkzeugaufnahme (2) und der Spulenanordnung (6) ist ein Polschuh (9) angeordnet, der ebenfalls ringförmig die Werkzeugaufnahme (2) und das Werkzeug (5) umgibt und vorzugsweise zentrisch zur Mittelachse (21) der Vorrichtung (1) bzw. des Schrumpfgeräts und der Werkzeugaufnahme (2) ausgerichtet ist. Der Polschuh (9) kann einteilig oder mehrteilig ausgebildet sein und ist über eine geeignete Polschuhaufnahme (20) an der Vorrichtung (1), z.B. am Spulengehäuse (7) an oder in dessen oberer Zugangsöffnung (44) angeordnet. Die Anordnung kann fest oder lösbar sein. Die lösbare Anordnung ermöglicht einen Austausch des Polschuhs (9), z.B. zur Anpassung an unterschiedliche Werkzeugaufnahmen (2) oder Werkzeuge (5). Bei geeigneter Ausbildung kann der Polschuh (9) auch verstellbar sein.

Wie Figur 1 und 3 verdeutlichen, hat der Polschuh (9) eine zentrale Durchgangsöffnung (18) für das Werkzeug (5) und kann in diesem Bereich an der Stirnfläche (4) der Werkzeugaufnahme (2) bzw. Hülse (3) anliegen oder zumindest eng benachbart sein. Im Bereich der Durchgangsöffnung (18) können die außenseitigen Ränder des Polschuhs eine den Magnetfluss konzentrierende zur Achse (21) abfallende Anschrägung (19) aufweisen.

Der Polschuh (9) kann aus mehreren geschichteten dünnwandigen Lamellen (10) bestehen, die aus einem magnetisch und elektrisch leitenden Material bestehen. Figur 2, 4 und 5 verdeutlichen diese Anordnung. Die Lamellen (10) sind stehend angeordnet, wobei sie mit ihren Breitseiten benachbart ausgerichtet sind. Die Hauptebene der Lamellen (10) erstreckt sich im wesentlichen parallel zur Achse (21). Die vorzugsweise länglichen Lamellen haben mit ihren Längsachsen eine Ausrichtung quer zur zentralen Achse (21) des Schrumpfgeräts und sind mit ihren Breitseiten hochkant oder stehend angeordnet.

Die Lamellen (10) sind untereinander zu ein oder mehreren Lamellenpaketen (12,13) verbunden. Die Verbindung kann in beliebig geeigneter Weise, z.B. durch Kleben, Verstiften, eine elektrisch isolierende Bandage oder Umreifung oder dgl. erfolgen.

Die Lamellen (10) können aus einem beliebig geeigneten magnetisch und elektrisch leitenden Material bestehen. Vorzugsweise bestehen sie aus Metall, insbesondere aus MU-Metall (Nickel-Eisen-Legierung). Die Lamellen (10) können auch aus Trafoblechen bestehen. Trafobleche haben z.B. eine Permeabilitätszahl von ca. 4.000 bis 10.000. Sie haben außerdem bessere magnetische Eigenschaften als Ferrit, insbesondere eine höhere Sättigungsflussdichte, wobei die Remanenz und Koerzitivfeldstärke geringer als bei Ferrit sind. Die Trafobleche können herstellungsbedingt, z.B. durch Walzen, in Lamellenlängsrichtung eine bessere magnetische Leitfähigkeit als in Querrichtung haben. Bei MU-Metall liegt die Permeabilitätszahl z.B. zwischen 30.000 und 100.000. Die Permeabilität ist höher als bei Ferrit, wo sie bei ca. 2.000 bis 3.000 liegt. Im Gegensatz zu Ferrit sind die Lamellen (10) elektrisch leitend.

Die Lamellen (10) können innerhalb der Lamellenpakete (12,13) gegenseitig elektrisch isoliert sein. An den Breitseiten der Lamellen (10) ist hierbei z.B. eine elektrische Isolierung (11) in Form einer Beschichtung oder einer Zwischenlage angeordnet. Trafobleche sind z.B. bereits mit einer solchen Beschichtung versehen. Alternativ kann zwischen blanke Metallbleche eine isolierende Einlage, z.B. aus Trafopapier oder dergl. eingelegt sein.

Für die Gestaltung und Geometrie des Polschuhs (9) gibt es verschiedene Ausführungsmöglichkeiten. Die Lamellenpakete (12,13) können ein- oder mehrlagig vorhanden sein.

Insbesondere können zwei oder mehr Lamellenpakete (12,13) übereinander angeordnet sein. Die übereinander angeordneten Lamellenpakete (12,13) können hierbei unterschiedliche Lamellenausrichtungen aufweisen. Insbesondere können die Lamellenausrichtungen einander im wesentlichen rechtwinklig kreuzen. Durch die Isolierung (11) wird ein Stromfluss zwischen den einzelnen Lamellen (10) und quer zur Lamellenausrichtung verhindert. Bei kreuzweise ausgerichteten Lamellenpaketen (12,13) kann das in den Lamellenrichtungen verlaufende torroidförmige Magnetfeld mit mehreren Richtungskomponenten in die Werkzeugaufnahme (2) geleitet werden, wobei richtungsbedingte Verluste weitgehend vermieden werden.

Der Polschuh (9) kann in unterschiedlicher Weise ausgebildet sein. Figur 2 und 4 sowie 7 bis 14 verdeutlichen hierfür verschiedene Varianten. In Figur 2 ist der Polschuh als Scheibe (14), insbesondere als Ringscheibe ausgebildet. Die Scheibe (14) kann aus einem einzelnen Lamellenpaket (12) oder mehreren übereinander angeordneten und vorzugsweise kreuzweise zueinander ausgerichteten Lamellenpaketen (12,13) bestehen. Die zentrale Durchgangsöffnung (18) ist aus den Lamellenpaketen (12,13) freigeschnitten. Wie Figur 1 verdeutlicht, kann eine solche Scheibe (14) in einer ringförmigen Scheibenaufnahme (20) geführt und mittels einer Verschlusseinrichtung (38) lösbar befestigt sein, z.B. über einen Bajonettverschluss oder dgl.. Die Scheibe (14) lässt sich bei Bedarf wechseln, wobei z.B. verschiedene Polschuhe (9) unterschiedlich große Durchmesser der Durchgangsöffnung (18) aufweisen können.

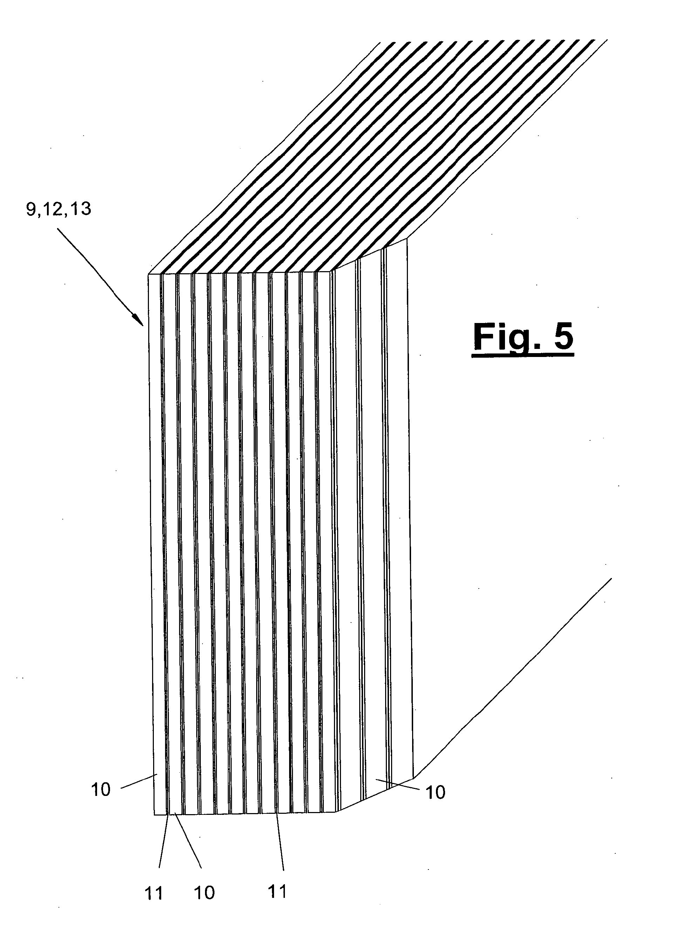

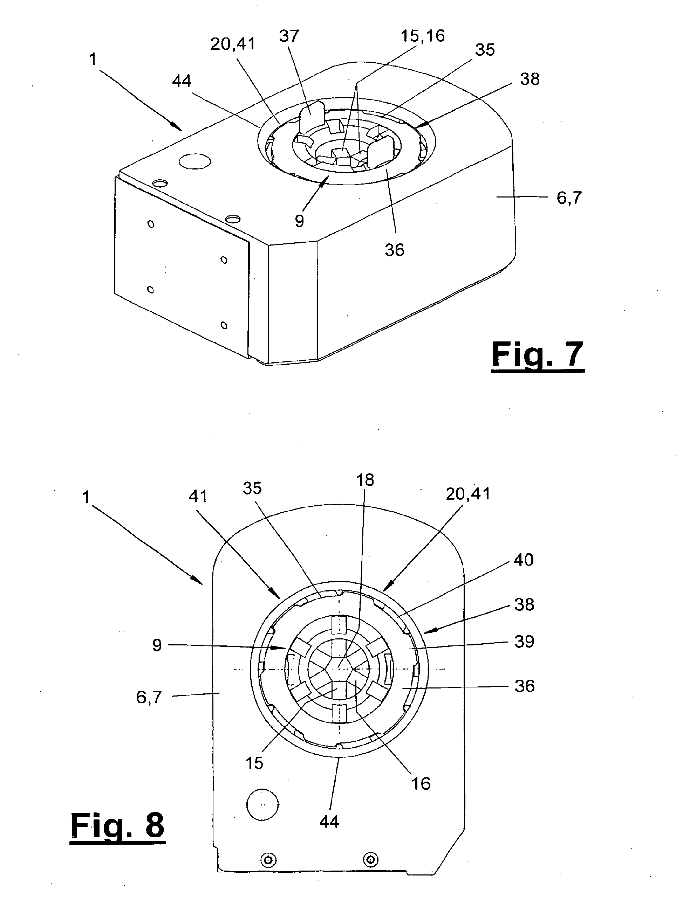

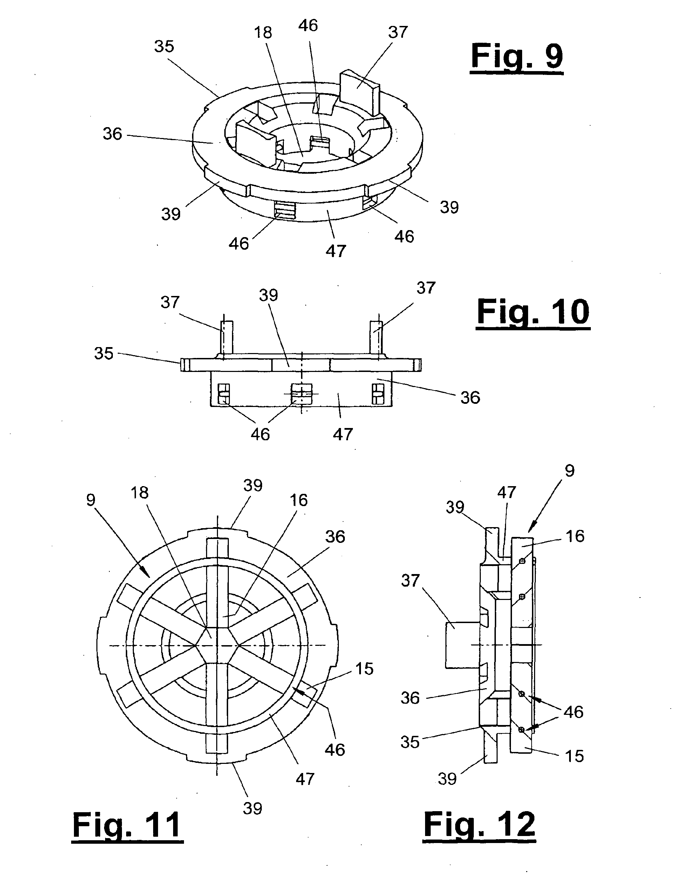

Figur 4 und 5 zeigen eine andere Variante, in der der Polschuh (9) mehrere als Block (15,16) ausgebildete Lamellenpakete (12,13) aufweist. Der einzelne Block (15,16) kann hierbei z.B. eine im wesentlichen quaderförmige Kontur haben, wie sie in Figur 5 und bei einem Teil der Blöcke (15,16) in Figur 4 und in Figur 8 und 11 dargestellt ist.

Der Polschuh (9) besteht bei der Blockvariante aus mindestens zwei z.B. paarweise gegenüberliegenden Blöcken (15,16). Dies können z.B. nur die zwei in Figur 4 dargestellten Blöcke (16) sein, die einander an der zentralen Achse (21) mit Abstand gegenüber liegen und eine Durchlassöffnung (18) freilassen. Der Polschuh (9) kann auch aus vier, sechs oder mehr gleichmäßig im Kreis um die Achse (21) verteilten und dabei jeweils paarweise einander gegenüber liegenden Blöcken (15,16) bestehen. Die Blöckezahl kann auch ungerade sein, wobei keine paarweise gegenüberliegende Zuordnung gegeben ist. Die Blöcke (15,16) sind in diesen Anordnungen im wesentlichen radial zur zentralen Achse (21) ausgerichtet und umgeben die Durchlassöffnung (18), wobei sie gerade oder gerundete Frontseiten aufweisen können. Sie können an ihren vorderen Rändern distanziert sein oder zusammenstossen, wobei für eine dichte Anordnung auch abgeschrägte Eckbereiche vorhanden sein können, wie sie in Figur 11 und im rechten Teil von Figur 5 dargestellt sind.

Die Blöcke (15,16) sind jeweils einzeln in geeigneter Weise gelagert und gehalten, wobei sie z.B. auf der Spulenauflage (20) der Spulenanordnung (6) angeordnet sind. Diese Anordnung kann fest oder lösbar sein. Die Blöcke (15,16) können außerdem verstellbar und insbesondere radial zur Achse (21) verstellbar angeordnet sein. Pfeile verdeutlichen in Figur 4 die Verstellrichtung. Hierdurch lässt sich bei Bedarf die Durchlassöffnung (18) verkleinern oder vergrößern.

Figur 4 zeigt verschiedene Ausbildungsvarianten der Blöcke (15,16). Die Blöcke (16) sind quaderförmig ausgebildet. Dies ist auch bei dem linken Block (15) in Figur 4 der Fall. Der rechte Block (15) in Figur 4 zeigt eine andere Gestaltung, wie sie auch in der Querschnittsdarstellung von Figur 3 aufscheint. Dieser Block (15) hat eine abgewinkelte Form und ist z.B. als in Seitenansicht im wesentlichen U-förmiger Bügel (17) ausgebildet, welcher die Spulenanordnung (6) an drei Seiten umgreifen kann. Der untere Bügelschenkel ist hierbei kürzer als der obere Schenkel. Dies entspricht den unterschiedlichen Durchmessern der im wesentlichen kegelförmigen Werkzeugaufnahme (2) und der zumindest bereichsweisen radialen Überdeckung der Stirnfläche (4). Der bügelförmige Block (15) kann ebenfalls auf der Spulenanordnung (6) in ein oder mehreren Achsen verschiebbar gelagert sein. Insbesondere ist hierüber eine radiale Verstellung gegenüber der Achse (21) möglich.

Mehrere U-förmige, im Umfang verteilte Blöcke (15,16) können die Spulenabschirmung übernehmen und erlauben den Verzicht auf ein separates Spulengehäuse (7). Die Spulenanordnung (6) kann luftiger und kleiner bauen, wobei auch der Kühlbedarf verringert bzw. die Verfügbarkeit der Vorrichtung (1) erhöht wird.

Beim Polschuh (9) können mehrere Blöcke (15,16) eine solche Winkel- oder Bügelform (17) aufweisen. Der Polschuh (9) hat hierdurch zumindest bereichsweise eine Winkel- oder Bügelform (17). Eine solche Gestaltung ist auch in der Variante von Figur 2 möglich, wobei z.B. die Ringscheibe (14) in mehrere Segmente unterteilt ist, welche radial beweglich und verstellbar angeordnet sind.

Figur 7 bis 14 zeigen eine Variante der Spulenanordnung (6) und des Polschuhs (9). Der Polschuh (9) ist in dieser Ausführungsform ebenfalls lösbar in oder an der Zugangsöffnung (44) des Spulengehäuses (7) angeordnet.

Der Polschuh (9) weist in dieser Ausführungsform einen Polschuhhalter (35) auf, der z.B. ein ringförmiges Gehäuse (36) mit ein oder mehreren Griffteilen (37) besitzt. Der Polschuh (9) wird auch hier von mehreren Blöcken (15,16) der vorbeschriebenen Art gebildet, die sternförmig und gleichmäßig verteilt im Kreis um die zentrale Achse (21) angeordnet sind und zwischen sich die Durchgangsöffnung (18) freilassen. Die Blöcke (15,16) haben in diesem Fall z.B. eine Quaderform mit abgeschrägten Eckbereichen an der Vorderseite und mit stehenden Lamellen (10). Die Lamellenstruktur ist der Übersichtlichkeit halber nicht dargestellt.

Die Blöcke (15,16) liegen am Polschuhhalter (35) teilweise frei und ragen z.B. quer durch Halteöffnungen (46) einer ringförmigen Manschette (47) an der Unterseite des Gehäuses (36). Figur 9 und 10 verdeutlichen die Ausbildung des Polschuhhalters (35) und seines Gehäuses (36) ohne die Blöcke (15,16). In Figur 11 und 12 sind der Polschuhhalter (35) mit den eingesteckten Blöcken (15,16) an einer aus zwei konzentrischen Ringen bestehenden Manschette (47) dargestellt. Aus dieser Darstellung ist ersichtlich, dass die Blöcke (15,16) mit ihren rückwärtigen Enden nach außen über die ringförmige Manschette (47) hinausragen. Nach oben und in Einbaustellung zur Oberseite des Spulengehäuses (7) hin sind die Blöcke (15,16) weitgehend durch das Gehäuse (36) abgedeckt. Das Gehäuse (36) kann aus einem geeigneten elektrisch und magnetisch isolierenden Material, z.B. aus Kunstoff, bestehen.

Zur Anpassung an unterschiedliche Werkzeugaufnahmen (2) und Werkzeuge (5) können die Polschuhe (9) und der Polschuhhalter (35) gewechselt werden. Die Blöcke (15,16) haben hierbei eine unterschiedliche Größe und Anordnung und lassen zwischen sich unterschiedlich große Durchgangsöffnungen (18) frei.

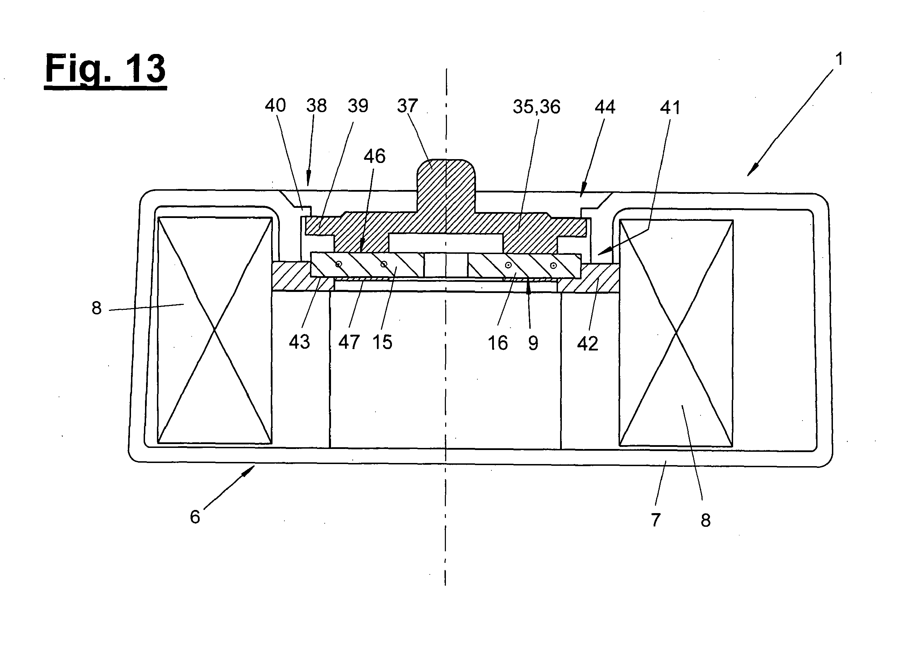

Zur Fixierung des Polschuhs (9) und des Polschuhhalters (35) ist auch in diesem Ausführungsbeispiel eine Verschlusseinrichtung (38) vorhanden. Diese ist z.B. als Bajonettverschluss in verschiedenen Varianten ausgebildet. In der Ausführungsform von Figur 7 bis 13 sind am Rand des Gehäuses (36) mehrere nach außen ragende Vorsprünge (39) angeordnet, die mit mehreren nach innen ragenden Vorsprüngen (40) des Spulengehäuses (7) zusammenwirken. Der Polschuhhalter (35) kann bei versetzter Ausrichtung der Vorsprünge (39,40) in die Zugangsöffnung (44) eingesetzt und dann über einen beschränkten Winkel gedreht werden, wobei die Vorsprünge (39,40) untereinander zu liegen kommen und durch eine Spannkurve des Bajonettverschlusses (38) federnd aneinander gepresst werden. Figur 13 verdeutlicht diese Anordnung.

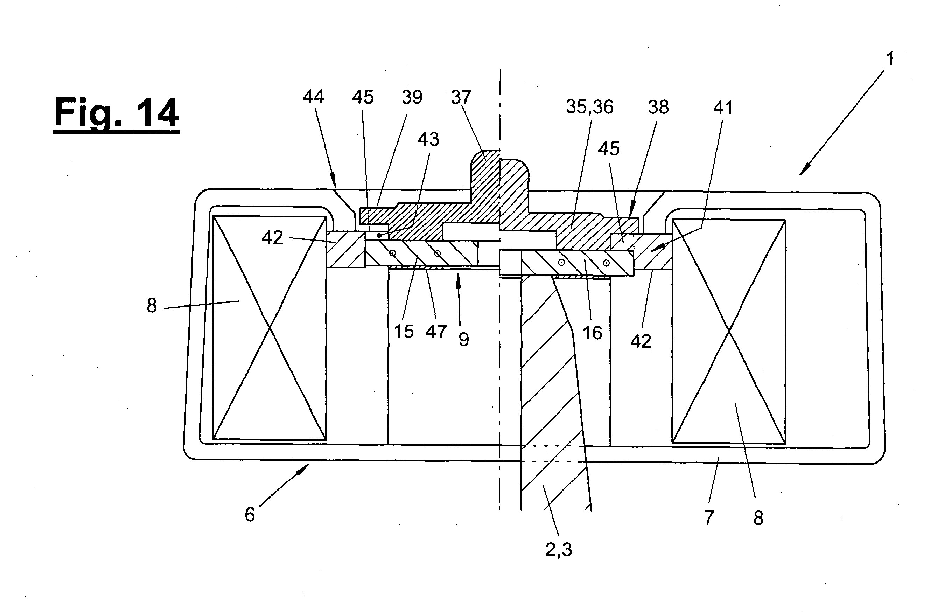

Die Spulenanordnung (6) weist in dieser Ausführungsform eine Polschuhaufnahme (20) auf, die als Blockaufnahme ausgebildet ist, welche die Blöcke (15,16) aufnimmt und mit der Spulenwicklung (18) magnetisch leitend verbunden ist. Die Blockaufnahme (41) kann unterschiedlich ausgebildet sein. Sie besteht aus einem magnetisch leitenden Material, z.B. Ferrit, wobei das Material elektrisch nicht leitend sein kann. In den gezeigten Ausführungsbeispielen von Figur 13 und 14 ist sie als Aufnahmering (42) ausgebildet, der mehrere Ausnehmungen (43) für die Blöcke (15,16) aufweist. Die Ausnehmungen (43) sind ihrer Zahl, Verteilung und Größe an die Blöcke (15,16) angepasst.

In der ersten Variante von Figur 13 haben die Ausnehmungen (43) eine Taschenform und sind als Stufen oder Nuten an der Oberseite des Aufnahmerings (42) ausgebildet. Sie dienen zur formschlüssigen Aufnahme und Führung der Blöcke (15,16). Figur 13 verdeutlicht diese Ausbildung. Der Aufnahmering (42) ist drehbar am Spulengehäuse (7) angeordnet und kann durch den Formschluss zwischen Blöcken (15,16) und Ausnehmungen (43) beim Öffnen und Schließen des Bajonettverschlusses zwischen Spulengehäuse (7) und Polschuhhalter (35) mitgenommen werden.

Figur 14 zeigt eine Variante der Blockaufnahme (41) und des Aufnahmerings (42). Dieser ist hier stationär angeordnet und kann einen Bestandteils eines Bajonettverschlusses (38) bilden, der in diesem Fall zwischen dem Polschuhhalter (35) und dem Aufnahmering (42) ausgebildet sein kann. Der Aufnahmering (42) weist in diesem Fall an seinem Innenrand mehrere radiale Vorsprünge (45) mit dazwischen liegenden Ausnehmungen (43) auf. Die Dicke der Vorsprünge (45) ist an die Höhe des Freiraums zwischen den rückseitigen Enden der Blöcke (15,16) und den darüber liegenden Vorsprüngen (39) des Gehäuses (36) angepasst. Beim Einsetzen des Polschuhhalters (35) werden die Blöcke (15,16) durch Ausnehmungen (43) in eine Position unterhalb der Vorsprünge (45) bewegt. Die Vorsprünge (39), die einzeln oder als durchgehender Ring ausgebildet sein können, liegen dann auf den Vorsprüngen (45) auf und begrenzen die Eintauchtiefe. Anschließend kann der Polschuhhalter (35) um die Achse (21) gedreht werden, wobei in Spannstellung des Bajonettverschlusses (38) die Blöcke (15,16) unter die Vorsprünge (45) gelangen. Bei Anordnung einer Spannkurve im Bajonettverschluss (38) kann die magnetisch leitende Dichteanlage zwischen den Blöcken (15,16) und dem Aufnahmering (42), insbesondere den Vorsprüngen (45) gesichert werden. Alternativ kann ein axiales Spiel vorhanden sein, welches beim Aufsetzen des Polschuhhalters (35) auf der in Figur 14 angedeuteten Spannhülse (3) aufgenommen wird. Figur 14 zeigt in der linken Bildhälfte die Einführstellung und in der rechten Bildhälfte die Spannstellung des Bajonettverschlusses (38).

Die lösbare Verbindung eines Polschuhs (9) und insbesondere eines Polschuhhalters (35) mit der Spulenanordnung (6) und dem Spulengehäuse (7) hat eine eigenständige erfinderische Bedeutung und kann auch bei konventiellen Vorrichtungen (1) zum induktiven Erwärmen eingesetzt werden. Der Polschuh (9) kann hierbei auch aus einem magnetisch leitenden und elektrisch nicht leitenden Material, z.B. aus Ferrit, bestehen. Insbesondere können die besagten Blöcke (15,16) aus Ferrit oder einem anderen geeigneten Material bestehen. Auch die Verschlusseinrichtung (38) und insbesondere deren Ausbildung als Bajonettverschluss haben eine eigenständige erfinderische Bedeutung und können ebenfalls in Verbindung mit konventiellen Vorrichtungen (1) und Polschuhen (9) aus anderen Materialien, z.B. Ferrit, eingesetzt werden. Die gleiche eigenständige Bedeutung hat die Blockaufnahme (41) in den verschiedenen Varianten, die ebenfalls mit Vorteil für Blöcke (15,16) aus Ferrit oder anderen Materialien eingesetzt werden kann. Die gesamte in den Figuren 6 bis 14 dargestellte Ausführungsform der Vorrichtung (1) lässt sich mit Erfolg auch mit Blöcken (15,16) aus Ferrit oder anderen geeigneten Materialien bauen und einsetzen.

Abwandlungen der gezeigten Ausführungsformen sind in verschiedener Weise möglich. Die Lamellenform kann differieren und muss nicht die in den Ausführungsbeispielen gezeigte Rechteckform haben. Alternativ sind gewölbte oder gebogene Formen möglich, ähnlich auch zur Bügelform (17). Ferner können die Blöcke (15,16) eine andere als die gezeigte quaderförmige Kontur haben. Sie können insbesondere in Draufsicht als Ringsegmente ausgebildet sein. Ferner sind andere geeignete Materialien für die Lamellen (10) möglich. Auch die Isolierung (11) kann in anderer Weise, z.B. durch Abstandsbildung zwischen den Lamellen (10) oder dergl. ausgeführt sein. Ferner können die Lamellen liegend angeordnet sein und in mehreren gegenseitig isolierten Schichten übereinander und ggf. auch nebeneinander angeordnet sein. Vorzugsweise ist die Abmessung der Lamellen in Umfangsrichtung bzgl. der zentralen Achse (21) gering. Die Lamellen (10) können ferner statt der gezeigten dünnwandigen Blattform auch eine dünne Stangen- oder Stiftform haben.

### BEZUGSZEICHENLISTE

- 1: Vorrichtung zum induktiven Erwärmen, Schrumpfgerät
- 2: Werkzeugaufnahme
- 3: Hülse
- 4: Stirnfläche
- 5: Werkzeug
- 6: Spulenanordnung
- 7: Spulengehäuse
- 8: Spulenwicklung
- 9: Polschuh
- 10: Lamelle, Trafoblech
- 11: Isolierung
- 12: Lamellenpaket
- 13: Lamellenpaket
- 14: Scheibe
- 15: Block
- 16: Block
- 17: Bügel
- 18: Durchgangsöffnung
- 19: Anschrägung
- 20: Polschuhaufnahme
- 21: Achse, Längsachse
- 22: Stromkabel
- 23: Führung, Ständer
- 24: Lagerung
- 25: Verstelleinrichtung
- 26: Griff
- 27: Gehäuse
- 28: Anzeige
- 29: Stromquelle, Induktionsstromgenerator
- 30: Steuerung
- 31: Schalteinrichtung
- 32: Schalter, Taster für Einschrumpfen
- 33: Schalter, Taster für Ausschrumpfen
- 34: Bedienfeld, Schalterfeld
- 35: Polschuhhalter
- 36: Gehäuse des Polschuhhalters
- 37: Griffteil
- 38: Verschlusseinrichtung, Bajonettverschluss
- 39: Vorsprung an Halter
- 40: Vorsprung an Spulengehäuse
- 41: Blockaufnahme
- 42: Aufnahmering
- 43: Ausnehmung
- 44: Zugangsöffnung an Spulengehäuse
- 45: Vorsprung an Aufnahmering
- 46: Halteöffnung
- 47: Manschette

## Patentansprüche

1. Vorrichtung zum induktiven Erwärmen von Gegenständen, insbesondere Werkzeugaufnahmen (2), mit einer Spulenanordnung (6) und einem Polschuh (9) aus einem magnetisch leitenden Material, **dadurch gekennzeichnet, dass** der Polschuh (9) aus mehreren geschichteten Lamellen (10) aus einem magnetisch und elektrisch leitenden Material besteht.

2. Vorrichtung nach Anspruch 1, **dadurch gekennzeichnet, dass** die Lamellen (10) stehend angeordnet sind.

3. Vorrichtung nach Anspruch 1 oder 2, **dadurch gekennzeichnet, dass** die Lamellen (10) gegenseitig elektrisch isoliert (11) sind.

4. Vorrichtung nach Anspruch 1, 2 oder 3; **dadurch gekennzeichnet, dass** die Lamellen (10) aus Metall, insbesondere aus MU-Metall oder aus Trafoblech bestehen und die elektrische Isolierung (11) als Beschichtung auf den Lamellen (10) oder als Einlage, z.B. aus Trafopapapier, ausgebildet ist.

5. Vorrichtung nach einem der vorhergehenden Ansprüche, **dadurch gekennzeichnet, dass** die nebeneinander angeordneten Lamellen (10) zu mindestens einem Lamellenpaket (12,13) verbunden sind.

6. Vorrichtung insbesondere nach einem der vorhergehenden Ansprüche, **dadurch gekennzeichnet, dass** der Polschuh (9) verstellbar oder lösbar und austauschbar an der Spulenanordnung (6) angeordnet ist.

7. Vorrichtung nach einem der vorhergehenden Ansprüche, **dadurch gekennzeichnet, dass** die Spulenanordnung (6) eine Aufnahme (20) zur lösbaren Befestigung des Polschuhs (9) aufweist.

8. Vorrichtung nach einem der vorhergehenden Ansprüche, **dadurch gekennzeichnet, dass** für den den Polschuh (9) eine Verschlusseinrichtung (38), vorzugsweise ein Bajonettverschluss, vorgesehen ist.

9. Vorrichtung nach einem der vorhergehenden Ansprüche, **dadurch gekennzeichnet, dass** der Polschuh (9) als Scheibe (14), insbesondere als Ringscheibe, ausgebildet ist, die ein oder mehrere übereinander angeordnete Lamellenpakete (12,13) aufweist.

10. Vorrichtung nach einem der vorhergehenden Ansprüche, **dadurch gekennzeichnet, dass** die übereinander angeordneten Lamellenpakete (12,13) unterschiedliche, vorzugsweise im wesentlichen rechtwinklig gekreuzte, Lamellenausrichtungen aufweisen.

11. Vorrichtung nach einem der vorhergehenden Ansprüche, **dadurch gekennzeichnet, dass** der Polschuh (9) mehrere als Block (15,16) ausgebildete Lamellenpakete (12,13) aufweist.

12. Vorrichtung nach einem der vorhergehenden Ansprüche, **dadurch gekennzeichnet, dass** der Block (15,16) eine im wesentlichen quaderförmige, winkelförmige oder bügelförmige Kontur aufweist.

13. Vorrichtung nach einem der vorhergehenden Ansprüche, **dadurch gekennzeichnet, dass** der Polschuh (9) mehrere gleichmäßig im Kreis um die zentrale Achse (21) der Vorrichtung (1) angeordnete Blöcke (15,16) aufweist.

14. Vorrichtung insbesondere nach einem der vorhergehenden Ansprüche, **dadurch gekennzeichnet, dass** der Polschuh (9) einen in einer Zugangsöffnung (44) der Spulenanordnung (6) einsetzbaren Polschuhhalter (35) mit mehreren sternförmig angeordneten Blöcken (15,16) aufweist.

15. Vorrichtung nach einem der vorhergehenden Ansprüche, **dadurch gekennzeichnet, dass** der Polschuhhalter (35) ein ringförmiges Gehäuse (36) mit teilweise frei liegenden Blöcken (15,16) aufweist.

16. Vorrichtung nach einem der vorhergehenden Ansprüche, **dadurch gekennzeichnet, dass** die Spulenanordnung (6) eine mit der Spulenwicklung (8) magnetisch leitend verbundene Blockaufnahme (41) aufweist.

17. Vorrichtung nach einem der vorhergehenden Ansprüche, **dadurch gekennzeichnet, dass** die Blockaufnahme (41) als Aufnahmering (42) mit Ausnehmungen (43) für die Blöcke (15,16) ausgebildet ist.

18. Vorrichtung nach einem der vorhergehenden Ansprüche, **dadurch gekennzeichnet, dass** die Blockaufnahme (41) drehbar angeordnet ist und die Ausnehmungen (43) eine Taschenform zur formschlüssigen Aufnahme der Blöcke (15,16) aufweisen.

19. Vorrichtung nach einem der Ansprüche 1 bis 16, **dadurch gekennzeichnet, dass** der Aufnahmering (42) innenrandseitige Ausnehmungen (43) für den Durchtritt der Blöcke (15,16) aufweist, wobei die Blöcke (15,16) nach Drehung des Polschuhhalters (35) an Vorsprüngen (45) des Aufnahmerings (42), die sich zwischen den Ausnehmungen (43) befinden, magnetisch leitend anliegen.

20. Vorrichtung nach Anspruch 19, **dadurch gekennzeichnet, dass** der Aufnahmering (42) stationär angeordnet und als Bestandteil eines Bajonettverschlusses (38) ausgebildet ist.
